# EUROPEAN PATENT APPLICATION

(11) **EP 4 597 950 A1**
(43) Date of publication of application: **06.08.2025**
(21) Application number: 22960071.3
(22) Date of filing: 29.09.2022
(51) Int. Cl.: H04L 27/00

(54) **SCHEDULING METHOD AND APPARATUS, DEVICE, AND READABLE STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Dehns Germany Partnerschaft mbB
(86) International application number: PCT/CN2022/122759
(87) International publication number: WO 2024/065434

(57) **Abstract**

The present disclosure relates to the field of communications, and provides a scheduling method and apparatus, a device, and a readable storage medium. The method comprises: receiving a common physical downlink shared channel (PDSCH), a means of receiving the common PDSCH being determined on the basis of a transmission resource parameter of the common PDSCH of a first-type terminal. The means of receiving the common PDSCH can be determined on the basis of the transmission resource parameter of the common PDSCH of the first-type terminal, so that the first-type terminal can differentially adjust the means of receiving the common PDSCH after determining the transmission resource parameter of the common PDSCH. When an ordinary terminal and the first-type terminal use the common PDSCH, terminal behavior of the first-type terminal is clarified, improving accuracy of scheduling the first-type terminal.

## Description

### TECHNICAL FIELD

The present disclosure relates to the field of communication, and in particular to a scheduling method and apparatus, a device, and a readable storage medium.

### BACKGROUND

In the 5G New Radio (NR), a new type of User Equipment (UE) has been designed to meet the requirements of middle-end Internet of Things (IoT) devices, such as relatively high data rates and high latency requirements. In 3GPP standardization, this new type of terminal is referred to as a Reduced Capability (RedCap) terminal, including an enhanced reduced capability (eRedCap) terminal.

In the related art, the eRedCap terminal and the ordinary terminal share the same common information, such as the same system messages, paging messages, and random access responses. However, when the baseband processing bandwidth of the common channel or the transmission block size (TBS) used exceeds the terminal capability of the eRedCap terminal, there is no well-established solution for the problem of how the eRedCap terminal should handle it.

### SUMMARY

The embodiments of the present disclosure provide a scheduling method, apparatus, device, and readable storage medium, enabling a first-type terminal (such as an eRedCap terminal) to differentially adjust a receiving mode for a common PDSCH based on a transmission resource parameter of the common PDSCH after receiving the transmission resource parameter of the common PDSCH. The technical solutions are as follows.

According to an aspect of the present disclosure, a scheduling method is provided, which is performed by a first-type terminal and includes:
receiving a common physical downlink shared channel (PDSCH), where a receiving mode of the common PDSCH is determined based on a transmission resource parameter of the common PDSCH of the first-type terminal.

In another aspect, a scheduling method is provided, which is performed by an access network device, and the method includes:
configuring a transmission resource parameter of a common PDSCH for a first-type terminal, where the transmission resource parameter is used to indicate a receiving mode for the common PDSCH.

In another aspect, a scheduling apparatus is provided, which is applied to a terminal and includes:
a determining module, configured to receive a common physical downlink shared channel (PDSCH), where a receiving mode of the common PDSCH is determined based on a transmission resource parameter of the common PDSCH of the first-type terminal.

In another aspect, a scheduling apparatus is provided, which is applied to an access network device and includes:
a configuration module, configured to configure a transmission resource parameter of a common PDSCH for a first-type terminal, where the transmission resource parameter is used to indicate a receiving mode for the common PDSCH.

In another aspect, a terminal is provided, which includes:
a processor; and
a transceiver, connected to the processor;
where the processor is configured to perform executable instructions to implement the scheduling method as described in the above embodiment of the present disclosure.

In another aspect, an access network device is provided, which includes:
a processor; and
a transceiver, connected to the processor;
where the processor is configured to perform executable instructions to implement the scheduling method as described in the above embodiment of the present disclosure.

In another aspect, a computer-readable storage medium is provided, in which at least one instruction, at least one program, a code set, or an instruction set is stored. The above at least one instruction, at least one program, code set, or instruction set is performed by a processor to implement the scheduling method as described in the above embodiments of the present disclosure.

The beneficial effects brought by the technical solution provided by the embodiments of the present disclosure include at least the following.

Based on the transmission resource parameter of the common PDSCH of the first-type terminal, the receiving mode for the common PDSCH is determined. This enables the first-type terminal to differentially adjust the receiving mode for the common PDSCH after determining the transmission resource parameter of the common PDSCH. When an ordinary terminal and a first-type terminal use the common PDSCH, the terminal behavior of the first-type terminal is clarified, thereby improving the accuracy of scheduling the first-type terminal.

### BRIEF DESCRIPTION OF THE DRAWINGS

In order to more clearly illustrate the technical solutions of the embodiments of the present disclosure, the accompanying drawings to be used in the description of the embodiments of the present disclosure will be briefly introduced below. Obviously, the drawings in the following description are only some embodiments of the present disclosure. For those of ordinary skill in art, other drawings can also be obtained according to these drawings without the need for creative effort.
FIG. 1 is a block diagram of an architecture of a communication system provided by an embodiment of the present disclosure;
FIG. 2 is a flowchart of a scheduling method on a terminal side provided by an exemplary embodiment of the present disclosure;
FIG. 3 is a flowchart of a scheduling method on a terminal side provided by another exemplary embodiment of the present disclosure;
FIG. 4 is a flowchart of a scheduling method on a terminal side provided by still another exemplary embodiment of the present disclosure;
FIG. 5 is a flowchart of a scheduling method on a terminal side provided by yet another exemplary embodiment of the present disclosure;
FIG. 6 is a flowchart of a scheduling method on a terminal side provided by yet another exemplary embodiment of the present disclosure;
FIG. 7 is a flowchart of a scheduling method on an access network device side provided by an exemplary embodiment of the present disclosure;
FIG. 8 is a flowchart of a scheduling method on an access network device side provided by another exemplary embodiment of the present disclosure;
FIG. 9 is a flowchart of a scheduling method on an access network device side provided by still another exemplary embodiment of the present disclosure;
FIG. 10 is a flowchart of a scheduling method on an access network device side provided by yet another exemplary embodiment of the present disclosure;
FIG. 11 is a flowchart of a scheduling method by interaction between an access network device side and a terminal side, provided by an exemplary embodiment of the present disclosure;
FIG. 12 is a schematic diagram of a structure of a scheduling apparatus shown in an exemplary embodiment of the present disclosure;
FIG. 13 is a schematic diagram of a structure of a scheduling apparatus shown in another exemplary embodiment of the present disclosure; and
FIG. 14 is a structural block diagram of a communication device shown in an exemplary embodiment of the present disclosure.

### DETAILED DESCRIPTION

In order to make the purpose, technical solutions and advantages of the present disclosure clearer, embodiments of the present disclosure will be described in further detail below with reference to the accompanying drawings.

In the Long Term Evolution (LTE) 4G system, in scenarios such as low data rate and high latency in Internet of Things services, two major technologies, namely Narrow Band Internet of Things (NB-IoT) and Machine Type Communication (MTC), are usually adopted for communication. NB-IoT usually may only support a data rate of several hundred kilobits; MTC usually can only support a data rate of several megabits. However, with the continuous development of IoT services, such as the popularization of services like video surveillance, smart home, wearable devices, and industrial sensing and monitoring, these services generally require not only a data rate ranging from tens of megabits to 100 megabits but also have relatively high requirements for latency. Based on the above situation, a new type of terminal device has been proposed in the 5G New Radio. In the standardization of the 3rd Generation Partnership Project (3GPP), this new type of terminal is referred to as a Reduced capability UE, that is, a RedCap terminal, which includes an eRedCap terminal.

In the related art, the first-type terminal (such as the eRedCap terminal) and the ordinary terminal share the same public information, such as same system messages, paging messages, and random access responses. However, in order to reduce the complexity of the first-type terminal, a baseband processing bandwidth of a Physical Downlink Shared Channel (PDSCH) received by the first-type terminal is usually limited; or the TBS of the PDSCH received by the first-type terminal is limited. Therefore, there is a difference in processing capabilities between the first-type terminal and the ordinary terminal. Although the first-type terminal and the ordinary terminal share the same public channel, when the baseband processing bandwidth of the public channel or the TBS used by the public channel exceeds the terminal capability of the first-type terminal, there is no good solution to the problem of how the first-type terminal should handle it.

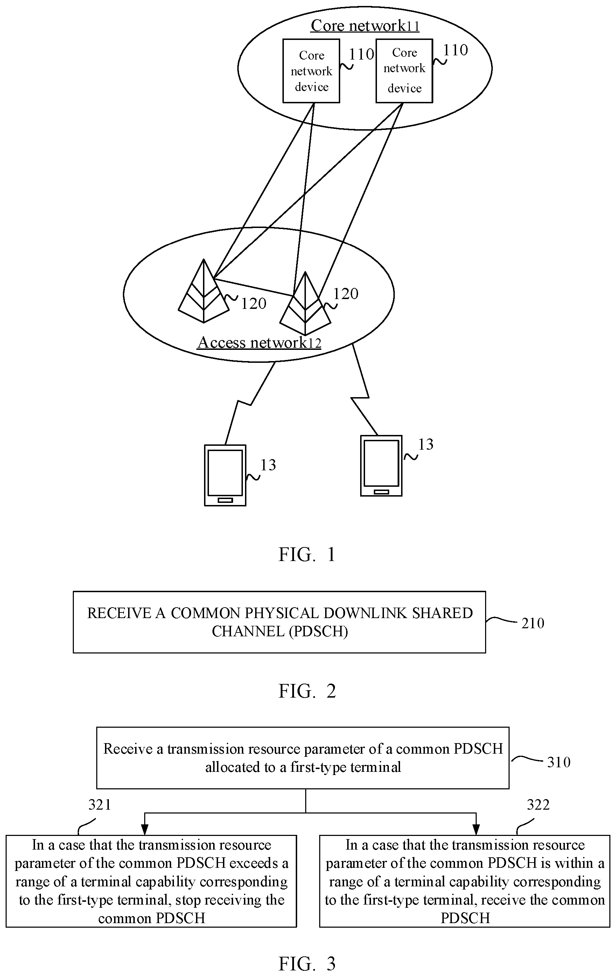

FIG. 1 illustrates a block diagram of a communication system provided by an exemplary embodiment of the present disclosure. The communication system may include a core network 11, an access network 12, and a terminal 13.

The core network 11 includes several core network devices 110. The core network device 110 is a device deployed in the core network. The main functions of the core network device are to provide user connection, user management, complete the bearer for a service, and serve as a bearer to provide an interface to the external network. For example, the core network device in a 5G NR system may include an access and mobility management function (AMF) network element, a user plane function (UPF) network element, a session management function (SMF) network element, etc. Illustratively, the core network device 30 in the embodiments of the present application may include a location management function network element. Optionally, the location management function network element includes a location server, and the location server may be implemented as any of the following: a location management function (LMF), an enhanced serving mobile location centre (ESMLC), a secure user plane location (SUPL), or a SUPL Location Platform (SUPL SLP).

The access network 12 includes several access network devices 120. The access network device 120 may be a base station, which is a device deployed in the access network to provide wireless communication functions for the terminal. Base stations may include various forms of macro base stations, micro base stations, relay stations, access points, or transmission reception points (TRPs), etc. In systems adopting different wireless access technologies, the names of devices with base station functions may vary. For example, in an LTE system, it is referred to as an eNodeB or eNB; in a 5G NR system, it is referred to as a gNodeB or gNB. As communication technology evolves, the term "base station" may change. For the convenience of description, the aforementioned apparatuses providing wireless communication functions for terminals are collectively referred to as access network devices in the embodiments of the present disclosure.

The terminal 13 may include various handheld devices, vehicle devices, wearable devices, computing devices, or other processing devices connected to wireless modems with wireless communication functions, and terminals in various forms, a Mobile Station (MS), and a terminal device, etc. For the convenience of description, the above-mentioned devices are collectively referred to as terminals. In the embodiments of the present application, the terminal 13 includes an ordinary terminal and an eRedCap terminal. Compared with the ordinary terminal, the eRedCap terminal is characterized by lower complexity and power savings. The access network device 120 communicates with the terminal 13 through a certain air interface technology, such as a Uu interface.

Industrial sensors, video surveillance cameras, and wearable devices based on 5G do not require such a large bandwidth. Especially for industrial sensors, only a transmission bandwidth of a few megabytes is required. Such terminals may be classified as a new type of terminal in the enhancements of subsequent releases of 5G, and corresponding technical characteristics may be improved. That is, the eRedCap terminal provided in the embodiments of the present application is a terminal obtained after version enhancement of the above ordinary terminal, so that the eRedCap terminal better may better adapt to scenarios with low latency and high rate. The eRedCap terminal may also be simply referred to as an NR-lite (lightweight) terminal, which is similar to the IoT devices in LTE and needs to meet the following requirements:
1. Low cost and low complexity;
2. Coverage enhancement to a certain extent; and
3. Power saving.

Optionally, during the process of wireless communication between the above terminal 13 and the above access network device 120, the wireless communication may be carried out through either a licensed frequency band or an unlicensed frequency band.

Illustratively, reference is made to FIG. 2, which is a flowchart of a scheduling method provided by an exemplary embodiment of the present disclosure. Description is given by taking the method being applied to a first-type terminal as an example. As shown in FIG. 2, the method includes the following step 210.

In step 210, a common physical downlink shared channel (PDSCH) is received.

A receiving mode of the common PDSCH is determined based on a transmission resource parameter of the common PDSCH of the first-type terminal.

Optionally, the first-type terminal includes an enhanced reduced capability (eRedCap) terminal. The eRedCap terminal is used to represent a terminal with enhanced reduced capability, that is, the eRedCap terminal is represented as an enhanced Reduced Capability UE. Illustratively, the enhanced reduced capability is used to represent the enhancement of the reduction of the terminal capability.

The implementation of the first-type terminal as an eRedCap terminal is merely an illustrative example, and the embodiments of the present application do not impose any limitation on this.

Illustratively, compared to an ordinary terminal, the terminal capability of eRedCap terminal is reduced. Generally, the terminal capability corresponding to the eRedCap terminal is reduced in at least one of the following aspects.
(1) A baseband processing bandwidth is reduced, for example, a frequency domain width of the PDSCH received by the eRedCap terminal is limited within 5MHz.
(2) A TBS of each PDSCH is limited, for example, the maximum TBS of each PDSCH is limited within 10,000 bits (binary digit, bit).

In some optional embodiments, the transmission resource parameter includes at least one of the baseband processing bandwidth and the TBS of the common PDSCH allocated to the first-type terminal.

Optionally, the first-type terminal receives the transmission resource parameter sent by the access network device. Illustratively, the access network device transmits the allocated transmission resource parameter of the common PDSCH to the first-type terminal through a physical downlink control channel (PDCCH).

Optionally, the common PDSCH refers to a transmission communication data channel shared by the ordinary terminal and the first-type terminal, that is, the common PDSCH is a channel jointly used by the ordinary terminal and the first-type terminal.

Illustratively, when the first-type terminal is implemented as an eRedCap terminal, the common PDSCH refers to the transmission communication data channel shared by the ordinary terminal and the eRedCap terminal, that is, the common PDSCH is a channel jointly used by the ordinary terminal and the eRedCap terminal.

In an optional embodiment, the receiving mode of the common PDSCH is determined based on the transmission resource parameter of the common PDSCH of the first-type terminal and a terminal capability corresponding to the first-type terminal.

In an optional embodiment, the implementation of the first-type terminal as an eRedCap terminal is taken as an example for illustration. When determining the receiving mode of the common PDSCH based on the transmission resource parameter of the common PDSCH of the eRedCap terminal and the terminal capability corresponding to the eRedCap terminal, one or more transmission resource parameters of the common PDSCH allocated to the eRedCap terminal are compared with the terminal capability corresponding to the eRedCap terminal, thereby determining the mode of the eRedCap terminal for receiving the common PDSCH.

Optionally, description is given by taking the implementation of the transmission resource parameter as the baseband processing bandwidth of the common PDSCH of the eRedCap terminal as an example. When determining the terminal capability corresponding to the eRedCap terminal, the bandwidth processing capability of the eRedCap terminal in the terminal capability of the eRedCap terminal is determined.

Illustratively, after determining the bandwidth processing capability corresponding to the eRedCap terminal, the baseband processing bandwidth of the common PDSCH is compared with the bandwidth processing capability of the eRedCap terminal, and the receiving mode of the common PDSCH is determined based on the comparison result between the baseband processing bandwidth and the bandwidth processing capability.

Optionally, description is given by taking the implementation of the transmission resource parameter as the TBS of the common PDSCH of the eRedCap terminal as an example. When determining the terminal capability corresponding to the eRedCap terminal, the processing capability of the transmission block that the eRedCap terminal can receive or read in the terminal capability of the eRedCap terminal is determined.

Illustratively, after determining the transmission block processing capability corresponding to the eRedCap terminal, the TBS of the common PDSCH is compared with the transmission block processing capability of the eRedCap terminal, and the receiving mode of the common PDSCH is determined based on the comparison result between the TBS and transmission block processing capability.

Optionally, description is given by taking the implementation of the transmission resource parameter as the baseband processing bandwidth and the TBS of the common PDSCH of the eRedCap terminal as an example. When determining the terminal capability corresponding to the eRedCap terminal, among the terminal capabilities of the eRedCap terminal, the bandwidth processing capability and the transmission block processing capability of the eRedCap terminal are determined, and the baseband processing bandwidth and the TBS of the common PDSCH are respectively compared with the corresponding terminal capabilities. That is to say, the baseband processing bandwidth of the common PDSCH is compared with the bandwidth processing capability of the terminal capabilities of the eRedCap terminal, and the TBS of the common PDSCH is compared with the transmission block processing capability of the terminal capabilities of the eRedCap terminal. Based on the comparison result of the baseband and the comparison result of the transmission block, the receiving mode for the common PDSCH is determined.

It should be noted that the way of illustrating the eRedCap terminal as the first-type terminal above is only an illustrative example, and the embodiments of the present application do not impose any limitation on this.

In summary, the receiving mode of the common PDSCH is determined based on the transmission resource parameter of the common PDSCH of the first-type terminal, which enables the first-type terminal to adjust the receiving mode of the common PDSCH differentially after determining the transmission resource parameter of the common PDSCH. The terminal behavior of the first-type terminal is clarified when the ordinary terminal and the first-type terminal use the common PDSCH, thereby improving the accuracy of scheduling the first-type terminal.

In the embodiments of the present application, the comparison between the terminal capability and the transmission resource parameter for the first-type terminal (such as the eRedCap terminal) includes at least one of the following processing methods.

Method 1: When the transmission resource parameter exceeds the processing capability of the first-type terminal, the first-type terminal does not expect that the PDSCH contains resource information of the first-type terminal. That is, the first-type terminal abandons the processing of the common PDSCH. For example, when the transmission resource parameter exceeds the processing capability of the first-type terminal, the eRedCap terminal does not expect that the PDSCH contains the resource information of the eRedCap terminal. That is, the eRedCap terminal abandons the processing of the common PDSCH.

Method 2: When the transmission resource parameter exceeds the processing capability of the first-type terminal, the common PDSCH may contain resource information of the first-type terminal. The first-type terminal reads the resource allocation range in the PDCCH. The first-type terminal will receive part of the resource information according to the terminal capability, and attempt to demodulate the resources within the range of the terminal capability to recover the information. For example, when the transmission resource parameter exceeds the processing capability of an eRedCap terminal, the common PDSCH may contain the resource information of the eRedCap terminal. The eRedCap terminal reads the resource allocation range in the PDCCH. The eRedCap terminal may receive part of the resource information according to the terminal capability, and attempt to demodulate the resources within the range of terminal capability to recover the information.

Method 3: A preset threshold is defined, which may be higher or lower than the terminal capability. When the transmission resource parameter exceeds the preset threshold, the first-type terminal gives up processing the subsequent common PDSCH. When the transmission resource parameter is lower than the preset threshold, the first-type terminal attempts to demodulate the common PDSCH. For example, a preset threshold is defined, which may be higher or lower than the terminal capability. When the transmission resource parameter exceeds the preset threshold, the eRedCap terminal gives up processing the subsequent common PDSCH. When the transmission resource parameter is lower than the preset threshold, the eRedCap terminal attempts to demodulate the common PDSCH.

The above-mentioned methods will be introduced in detail respectively.

**Method 1: When the transmission resource parameter exceeds the processing capability of the first-type terminal, the first-type terminal abandons the processing of the common PDSCH.**

Illustratively, as shown in FIG. 3, the above step 210 may also be implemented as the following steps 310 to 322.

In step 310, the transmission resource parameter of the common PDSCH allocated to the first-type terminal is received.

Illustratively, the implementation of the first-type terminal as an eRedCap terminal is taken as an example for illustration.

Optionally, the transmission resource parameter is implemented as the resource parameter allocated by the access network device to the first-type terminal. Illustratively, the access network device transmits the transmission resource parameter of the common PDSCH allocated to the eRedCap first-type terminal to the first-type terminal through a PDCCH. In some other embodiments, the transmission resource parameter may also be a parameter indicated by the core network device to the first-type terminal.

In some optional embodiments, the transmission resource parameter includes at least one of the baseband processing bandwidth and the TBS of the common PDSCH allocated to the first-type terminal.

Illustratively, when the first-type terminal receives the transmission resource parameter of the common PDSCH, the first-type terminal receives the baseband processing bandwidth of the common PDSCH allocated to the first-type terminal; alternatively, the first-type terminal receives the TBS of the common PDSCH allocated to the first-type terminal; alternatively, the first-type terminal receives both the baseband processing bandwidth and the TBS of the common PDSCH allocated to the first-type terminal.

In step 321, in a case that the transmission resource parameter of the common PDSCH exceeds the range of the terminal capability corresponding to the first-type terminal, the reception of the common PDSCH is stopped.

The terminal capability corresponding to the first-type terminal includes the resource processing capability of the first-type terminal for the PDSCH.

Illustratively, the implementation of the first-type terminal as an eRedCap terminal is taken as an example for illustration.

Optionally, the terminal capability corresponding to the eRedCap terminal is implemented as the terminal capability configured by the access network device for the eRedCap terminal; or, the terminal capability corresponding to the eRedCap terminal is implemented as the terminal capability configured by the eRedCap terminal itself, etc.

Optionally, when the transmission resource parameter of the common PDSCH allocated to the eRedCap terminal exceeds the terminal capability corresponding to the eRedCap terminal, the eRedCap terminal cannot receive the common PDSCH.

For different transmission resource parameters, the reception of the common PDSCH by the eRedCap terminal includes at least one of the following scenarios.

### 1. The transmission resource parameter includes the baseband processing bandwidth.

Illustratively, when the baseband processing bandwidth of the common PDSCH allocated to the eRedCap terminal exceeds the bandwidth processing capability corresponding to the eRedCap terminal, the eRedCap terminal stops receiving the common PDSCH.

### 2. The transmission resource parameter includes the TBS.

When the TBS of the common PDSCH allocated to the eRedCap terminal exceeds the transmission block processing capability corresponding to the eRedCap terminal, the eRedCap terminal stops receiving the common PDSCH.

### 3. The transmission resource parameter includes the baseband processing bandwidth and the TBS.

**3.1** When the baseband processing bandwidth of the common PDSCH allocated to the eRedCap terminal exceeds the bandwidth processing capability corresponding to the eRedCap terminal, and the TBS of the common PDSCH allocated to the eRedCap terminal exceeds the transmission block processing capability corresponding to the eRedCap terminal, the eRedCap terminal stops receiving the common PDSCH.

**3.2** When the baseband processing bandwidth of the common PDSCH allocated to the eRedCap terminal is within the range of the bandwidth processing capability corresponding to the eRedCap terminal (i.e., it does not exceed the bandwidth processing capability corresponding to the eRedCap terminal), but the TBS of the common PDSCH allocated to the eRedCap terminal exceeds the transmission block processing capability corresponding to the eRedCap terminal, the eRedCap terminal stops receiving the common PDSCH.

**3.3** When the TBS of the common PDSCH allocated to the eRedCap terminal is within the range of the transmission block processing capability corresponding to the eRedCap terminal (i.e., it does not exceed the transmission block processing capability corresponding to the eRedCap terminal), but the baseband processing bandwidth of the common PDSCH allocated to the eRedCap terminal exceeds the bandwidth processing capability corresponding to the eRedCap terminal, the eRedCap terminal stops receiving the common PDSCH.

It should be noted that the above are only illustrative examples, and the embodiments of the present application do not impose any limitation on this.

In step 322, in a case that the transmission resource parameter of the common PDSCH is within the range of the terminal capability corresponding to the first-type terminal, the common PDSCH is received.

Optionally, when the transmission resource parameter of the common PDSCH allocated to the first-type terminal is within the range of the terminal capability corresponding to the first-type terminal, the first-type terminal is capable of receiving the common PDSCH. For example, when the transmission resource parameter of the common PDSCH allocated to the eRedCap terminal is within the range of the terminal capability corresponding to the eRedCap terminal, the eRedCap terminal is capable of receiving the common PDSCH.

Illustratively, the implementation of the first-type terminal as an eRedCap terminal is taken as an example for illustration. For different transmission resource parameters, the reception of the common PDSCH by the eRedCap terminal includes at least one of the following scenarios.

### 1. The transmission resource parameter includes the baseband processing bandwidth.

Illustratively, when the baseband processing bandwidth of the common PDSCH allocated to the eRedCap terminal falls within the range of the bandwidth processing capability corresponding to the eRedCap terminal, the eRedCap terminal receives the common PDSCH.

### 2. The transmission resource parameter includes the TBS.

When the TBS of the common PDSCH allocated to the eRedCap terminal falls within the range of the transmission block processing capability corresponding to the eRedCap terminal, the eRedCap terminal receives the common PDSCH.

### 3. The transmission resource parameter includes the baseband processing bandwidth and the TBS.

When the baseband processing bandwidth of the common PDSCH allocated to the eRedCap terminal falls within the range of the bandwidth processing capability corresponding to the eRedCap terminal, and the TBS of the common PDSCH allocated to the eRedCap terminal is within the range of the transmission block processing capability corresponding to the eRedCap terminal, the eRedCap terminal receives the common PDSCH.

It should be noted that the above are only illustrative examples, and the embodiments of the present application do not impose any limitation on this.

In the embodiments of the present application, the receiving process of the common PDSCH is introduced. After the first-type terminal receives the transmission resource parameter of the common PDSCH allocated to the first-type terminal, when the transmission resource parameter of the common PDSCH exceeds the range of the terminal capability corresponding to the first-type terminal, the reception of the common PDSCH may be stopped; when the transmission resource parameter of the common PDSCH is within the range of the terminal capability corresponding to the first-type terminal, the common PDSCH may be received. In this way, the receiving mode of the common PDSCH is adjusted differentially, the behavior of the first-type terminal is made more explicit, and the accuracy of scheduling the first-type terminal is improved.

**Method 2: When the transmission resource parameter exceeds the processing capability of the first-type terminal, the first-type terminal reads the resource allocation range in the PDCCH, and the first-type terminal may receive part of the resource information according to the terminal capability.**

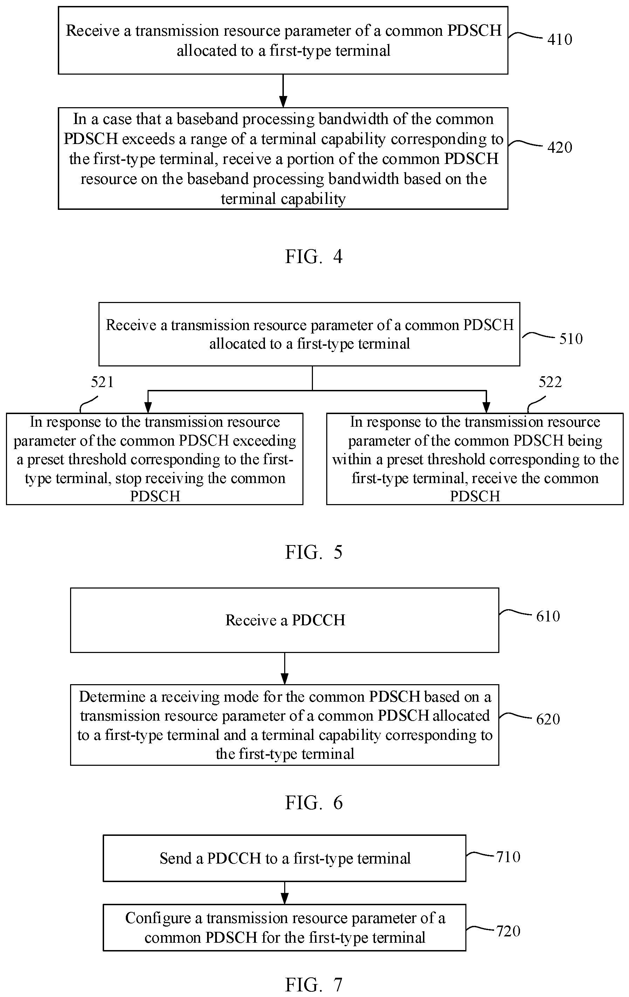

Illustratively, as shown in FIG. 4, the above step 210 may also be implemented as the following steps 410 to 420.

In step 410, the transmission resource parameter of the common PDSCH allocated to the first-type terminal is received.

Optionally, the transmission resource parameter is implemented as the resource parameter allocated by the access network device to the first-type terminal. For example, the access network device transmits the transmission resource parameter of the common PDSCH allocated to the first-type terminal to the first-type terminal through the PDCCH. In some other embodiments, the transmission resource parameter may also be a parameter indicated by the core network device to the first-type terminal. For example, the transmission resource parameter is implemented as a resource parameter allocated by the access network device to the eRedCap terminal. For example, the access network device transmits the transmission resource parameter of the common PDSCH allocated to the eRedCap terminal to the eRedCap terminal through the PDCCH. In other embodiments, the transmission resource parameter may also be a parameter configured by the core network device to the eRedCap terminal.

Optionally, the transmission resource parameter includes at least one of the baseband processing bandwidth and the TBS of the common PDSCH allocated to the first-type terminal. For example, the transmission resource parameter includes at least one of the baseband processing bandwidth and the TBS of the common PDSCH allocated to the eRedCap terminal.

In step 420, in a case that the baseband processing bandwidth of the common PDSCH exceeds the range of the terminal capability corresponding to the first-type terminal, a portion of the common PDSCH resource on the baseband processing bandwidth is received based on the terminal capability.

The terminal capability corresponding to the first-type terminal is used to represent the processing capability of the first-type terminal. Optionally, the terminal capability corresponding to the first-type terminal is implemented as the terminal capability configured by the access network device for the first-type terminal; or, the terminal capability corresponding to the first-type terminal is implemented as the terminal capability configured by the first-type terminal itself, etc. For example, the terminal capability corresponding to the eRedCap terminal is used to represent the processing capability of the eRedCap terminal. Optionally, the terminal capability corresponding to the eRedCap terminal is implemented as the terminal capability configured by the access network device for the eRedCap terminal; or, the terminal capability corresponding to the eRedCap terminal is implemented as the terminal capability configured by the eRedCap terminal itself, etc.

In an optional embodiment, the implementation of the first-type terminal as an eRedCap terminal is taken as an example for illustration. After determining the terminal capability corresponding to the eRedCap terminal, the bandwidth processing capability corresponding to the eRedCap terminal is determined. Illustratively, when the baseband processing bandwidth of the common PDSCH allocated to the eRedCap terminal exceeds the terminal capability corresponding to the eRedCap terminal, part of the common PDSCH resources on the baseband processing bandwidth is received based on the terminal capability.

A portion of the common PDSCH resource is used to represent the resource information that is transmitted on the baseband processing bandwidth and may be received by the eRedCap terminal. Optionally, the portion of the common PDSCH resource is independently determined by the first-type terminal based on the terminal capability.

It should be noted that the resource transmitted within the baseband processing bandwidth may be implemented either as a resource within the range of the terminal capability or as a resource beyond the range of the terminal capability, that is, the resource transmitted on the baseband processing bandwidth may exceed the terminal capability corresponding to the terminal.

Illustratively, when the resource transmitted on the baseband processing bandwidth is within the range of the terminal capability, the terminal receives the portion of the resource and takes the portion of the resource as a portion of the common PDSCH resource. When the resource transmitted on the baseband processing bandwidth is beyond the range of the terminal capability, the terminal itself determines a portion of the resource within its bandwidth processing capability from the resource transmitted on the baseband processing bandwidth as the portion of the common PDSCH resource. The above is merely an illustrative example, and the embodiments of the present application do not impose any limitation on this.

Illustratively, the process of obtaining a portion of the common PDSCH resource is described.

In an optional embodiment, when the baseband processing bandwidth of the common PDSCH exceeds the range of the terminal capability corresponding to the first-type terminal, the resource allocation range corresponding to the first-type terminal on the common PDSCH is read from the physical downlink control channel (PDCCH). The resource allocation range is used to represent the above resource transmitted on the baseband processing bandwidth.

For example, in response to the baseband processing bandwidth of the common PDSCH allocated to the eRedCap terminal exceeding the range of terminal capability corresponding to the eRedCap terminal, the resource allocation range corresponding to the eRedCap terminal is read from the PDCCH.

The PDCCH is used to transmit control information, which includes time-domain resource allocation information and frequency-domain resource allocation information of the PDSCH.

Illustratively, the implementation of the first-type terminal as an eRedCap terminal is taken as an example. When the baseband processing bandwidth of the common PDSCH exceeds the bandwidth processing capability corresponding to the eRedCap terminal, the resource allocation range corresponding to the eRedCap terminal is read from the PDCCH. For example, the eRedCap terminal reads the time-domain resource allocation information corresponding to the eRedCap terminal from the PDCCH, and/or the eRedCap terminal reads the frequency-domain resource allocation information corresponding to the eRedCap terminal from the PDCCH. That is, the resource allocation range includes at least one of the time-domain resource allocation information and the frequency-domain resource allocation information.

In an optional embodiment, a portion of the common PDSCH resource within the resource allocation range is received based on the terminal capability.

Optionally, based on the terminal capability corresponding to the eRedCap terminal, the eRedCap terminal can read a portion of the common PDSCH resource within its terminal capability range from the common PDSCH. Based on the bandwidth processing capability corresponding to the eRedCap terminal, the eRedCap terminal can read the resource information transmitted on the baseband processing bandwidth, which belongs to the bandwidth processing capability. This resource information is the above portion of the common PDSCH resource.

For example, the bandwidth processing capability corresponding to the eRedCap terminal is 3 MHZ, and the baseband processing bandwidth of the common PDSCH allocated to the eRedCap terminal is 5 MHZ. Since the baseband processing bandwidth of the common PDSCH allocated to the eRedCap terminal exceeds the terminal capability corresponding to the eRedCap terminal, the resource allocation range corresponding to the eRedCap terminal is read from the PDCCH. For example, the resource allocation range corresponding to the eRedCap terminal read from the PDCCH is 0 to 4 MHZ.

The resource allocation range corresponding to the eRedCap terminal represents the resource allocation range intended to be received by the eRedCap terminal, and the resource allocation range falls within the baseband processing bandwidth.

Illustratively, the resource allocation range is less than the terminal capability corresponding to the eRedCap terminal (i.e., the resource allocation range does not exceed the processing capability of the terminal, and the terminal is capable of processing the resource within the allocation range); alternatively, the resource allocation range is equal to the terminal capability corresponding to the eRedCap terminal; alternatively, the resource allocation range is greater than the terminal capability corresponding to the eRedCap terminal.

Illustratively, when the resource allocation range is less than the terminal capability corresponding to the eRedCap terminal, the eRedCap terminal is able to receive all the common PDSCH resources within the resource allocation range from the common PDSCH; or, when the resource allocation range is equal to the terminal capability corresponding to the eRedCap terminal, the eRedCap terminal is able to receive all the common PDSCH resources within the resource allocation range from the common PDSCH; or, when the resource allocation range is greater than the terminal capability corresponding to the eRedCap terminal, the eRedCap terminal is able to receive a portion of the common PDSCH resources within the resource allocation range from the common PDSCH, that is, the eRedCap terminal reads the portion of the common PDSCH resources from the common PDSCH that are within the resource allocation range (within the baseband processing bandwidth) and can be received by the eRedCap terminal.

Optionally, description is given by taking the example where the resource allocation range is from 0 to 4 MHz and the terminal capability corresponding to the eRedCap terminal is 3 MHz. When receiving a portion of the common PDSCH resources within the resource allocation range based on the terminal capability, a portion of the common PDSCH resources transmitted over a bandwidth of 0 to 3 MHz is received.

Due to the limitation of the terminal capability corresponding to the eRedCap terminal, the common PDSCH resource transmitted within the bandwidth of 3MHz to 4MHz and intended to be received by the eRedCap terminal cannot be directly received by the eRedCap terminal. Alternatively, based on the above situation, the resources transmitted within the bandwidth of 3MHz to 4MHz may be recovered through the following process.

In an optional embodiment, within the resource allocation range, data padding is performed on the resource data exceeding the portion of the common PDSCH resource to obtain the channel resource.

Optionally, the range used to represent data padding within the resource allocation range is the resource allocation range. When the resource allocation range exceeds the terminal capability corresponding to the eRedCap terminal, resources within the resource allocation range but outside the range of terminal capability and unreceivable by the eRedCap terminal are padded.

Illustratively, the resource allocation range is from 0 to 4 MHz, and the terminal capability corresponding to the eRedCap terminal is 3 MHz. When taking the resource allocation range as the reference and performing data padding on the resource data exceeding the portion of the common PDSCH resource, the portion of the common PDSCH resource within the bandwidth of 0 to 3 MHz is retained, and data padding is performed on the resource data within the 3-4 MHz bandwidth, thus realizing the process of performing data padding on part of the common PDSCH resource, and the resource obtained after padding is used as a channel resource. That is, the channel resource includes the portion of the common PDSCH resource and the padded resource obtained by performing data padding on the portion of the common PDSCH resource.

Illustratively, when performing data padding on the portion of the common PDSCH resource, the unreceived resource is padded, for example, padded with 0 or 1, to obtain the channel resource.

In an optional embodiment, the channel resource is demodulated to obtain channel transmission data.

Illustratively, after obtaining the channel resource based on the above data padding operation, a demodulation operation is performed on the channel resource to obtain the channel transmission data.

Optionally, after obtaining the above channel resource, an attempt is made to demodulate the channel resource. When the demodulation is successful, the channel transmission data is obtained. Alternatively, when the demodulation fails, the form of data padding is changed, for example, changing "padded with 1" to "padded with 0", and an attempt is made to demodulate the channel resource after changing the form of data padding. The above process is repeated until the channel transmission data is obtained.

It should be noted that the above are only illustrative examples, and the embodiments of the present application do not impose any limitation on this.

In the embodiments of the present application, a method for receiving channel transmission data as comprehensively as possible by way of data padding is introduced. When the baseband processing bandwidth of the common PDSCH falls within the range of the terminal capability corresponding to the first-type terminal, the common PDSCH may be received. When the baseband processing bandwidth of the common PDSCH exceeds the range of the terminal capability corresponding to the first-type terminal, a portion of the common PDSCH resource within the baseband processing bandwidth and within the resource allocation range may be received based on the terminal capability. Data padding is performed on the portion of the common PDSCH resource taking the resource allocation range as a reference, thereby demodulating the padded channel resource to obtain the restored channel transmission data as much as possible, enabling the first-type terminal to obtain information sent by the access network device as comprehensively as possible and avoid blindly discarding data within the range of terminal capability.

**Method 3: A preset threshold is defined, which may be higher or lower than the terminal capability. When the transmission resource parameter exceeds the preset threshold, the first-type terminal abandons processing the subsequent common PDSCH. When the transmission resource parameter is lower than the preset threshold, the first-type terminal attempts to demodulate the common PDSCH.**

Illustratively, as shown in FIG. 5, the above step 210 may also be implemented as the following steps 510 to 522.

In step 510, the transmission resource parameter of the common PDSCH allocated to the first-type terminal is received.

Optionally, the implementation of the first-type terminal as an eRedCap terminal is taken as an example for illustration. The transmission resource parameter is implemented as resource parameter allocated by the access network device to the eRedCap terminal. Illustratively, the access network device transmits the transmission resource parameter of the common PDSCH allocated to the eRedCap terminal to the eRedCap terminal through the PDCCH. In some other embodiments, the transmission resource parameter may also be a parameter configured by the core network device for the eRedCap terminal.

Optionally, the transmission resource parameter includes at least one of the baseband processing bandwidth and the TBS of the common PDSCH allocated to the first-type terminal.

In step 521, in response to the transmission resource parameter of the common PDSCH exceeding the preset threshold corresponding to the first-type terminal, the reception of the common PDSCH is stopped.

In an optional embodiment, the following description is provided by taking an eRedCap terminal implemented as the first-type terminal as an example. In response to the transmission resource parameter of the common PDSCH exceeding the preset threshold corresponding to the eRedCap terminal, the reception of the common PDSCH is stopped.

Optionally, the preset threshold allocated for the eRedCap terminal is determined.

The preset threshold allocated for the eRedCap terminal is used to represent the threshold processing capability pre-configured for the eRedCap terminal. Illustratively, the preset threshold is implemented as the processing capability configured by the access network device for the eRedCap terminal; alternatively, the preset threshold is implemented as the processing capability agreed upon by the protocol; alternatively, the preset threshold is implemented as a value determined through experience. For example, if a threshold value A can better achieve a data transmission effect during a plurality of transmission processes, then the threshold value A is used as the preset threshold.

Optionally, when the transmission resource parameter of the common PDSCH allocated to the eRedCap terminal exceeds the preset threshold corresponding to the eRedCap terminal, the eRedCap terminal cannot receive the common PDSCH.

Illustratively, the preset threshold includes at least one of a preset bandwidth threshold set for the baseband processing bandwidth and a preset TBS threshold set for the TBS.

For different transmission resource parameters, the reception of the common PDSCH by the eRedCap terminal includes at least one of the following scenarios.

### 1. The transmission resource parameter includes the baseband processing bandwidth.

Illustratively, when the baseband processing bandwidth of the common PDSCH allocated to the eRedCap terminal exceeds the preset bandwidth threshold corresponding to the eRedCap terminal, the eRedCap terminal stops receiving the common PDSCH.

### 2. The transmission resource parameter includes the TBS.

Illustratively, when the TBS of the common PDSCH allocated to the eRedCap terminal exceeds the preset TBS threshold corresponding to the eRedCap terminal, the eRedCap terminal stops receiving the common PDSCH.

### 3. The transmission resource parameter includes the baseband processing bandwidth and the TBS.

**3.1** When the baseband processing bandwidth of the common PDSCH allocated to the eRedCap terminal exceeds the preset bandwidth threshold corresponding to the eRedCap terminal, and the TBS of the common PDSCH allocated to the eRedCap terminal exceeds the preset TBS threshold corresponding to the eRedCap terminal, the eRedCap terminal stops receiving the common PDSCH.

**3.2** When the baseband processing bandwidth of the common PDSCH allocated to the eRedCap terminal is within the range of the preset bandwidth threshold corresponding to the eRedCap terminal, but the TBS of the common PDSCH allocated to the eRedCap terminal exceeds the preset TBS threshold corresponding to the eRedCap terminal, the eRedCap terminal stops receiving the common PDSCH.

**3.3** When the TBS of the common PDSCH allocated to the eRedCap terminal falls within the range of the preset TBS threshold corresponding to the eRedCap terminal, but the baseband processing bandwidth of the common PDSCH allocated to the eRedCap terminal exceeds the preset bandwidth threshold corresponding to the eRedCap terminal, the eRedCap terminal stops receiving the common PDSCH.

It should be noted that the above are only illustrative examples, and the embodiments of the present application do not impose any limitation on this.

In step 522, in response to the transmission resource parameter of the common PDSCH being within the preset threshold corresponding to the first-type terminal, the common PDSCH is received.

In an optional embodiment, the following description is provided by taking the first-type terminal implemented as an eRedCap terminal as an example. When the transmission resource parameter of the common PDSCH allocated to the eRedCap terminal falls within the range of the preset threshold corresponding to the eRedCap terminal, the eRedCap terminal is capable of receiving the common PDSCH.

For different transmission resource parameters, the reception of the common PDSCH by the eRedCap terminal includes at least one of the following scenarios.

### 1. The transmission resource parameter includes the baseband processing bandwidth.

When the baseband processing bandwidth of the common PDSCH allocated to the eRedCap terminal falls within the preset bandwidth threshold corresponding to the eRedCap terminal, the eRedCap terminal receives the common PDSCH.

### 2. The transmission resource parameter includes the TBS.

When the TBS of the common PDSCH allocated to the eRedCap terminal falls within the preset TBS threshold corresponding to the eRedCap terminal, the eRedCap terminal receives the common PDSCH.

### 3. The transmission resource parameter includes the baseband processing bandwidth and the TBS.

When the baseband processing bandwidth of the common PDSCH allocated to the eRedCap terminal is within the range of the preset bandwidth threshold corresponding to the eRedCap terminal, and the TBS of the common PDSCH allocated to the eRedCap terminal is within the range of the preset TBS threshold corresponding to the eRedCap terminal, the eRedCap terminal receives the common PDSCH.

It should be noted that the above are only illustrative examples, and the embodiments of the present application do not impose any limitation on this.

In the embodiments of the present application, a preset threshold pre-configured for the first-type terminal is introduced. When the transmission resource parameter of the common PDSCH exceeds the range of the preset threshold corresponding to the first-type terminal, the reception of the common PDSCH may be stopped; when the transmission resource parameter of the common PDSCH is within the range of the preset threshold corresponding to the first-type terminal, the common PDSCH may be received. Thus, the receiving mode for the common PDSCH is adjusted differentially, the behavior of the first-type terminal is further clarified, and the accuracy of scheduling the first-type terminal is improved.

In some optional embodiments, the transmission resource parameter of the common PDSCH allocated to the first-type terminal is read from the PDCCH. Illustratively, as shown in FIG. 6, the above step 210 may also be implemented as steps 610 to 620 as follows.

In step 610, a PDCCH is received.

The PDCCH carries indication information, which is used to indicate the transmission resource parameter of the common PDSCH allocated to the first-type terminal. Illustratively, the following description is given by taking the first-type terminal being implemented as an eRedCap terminal as an example. The eRedCap terminal can determine the transmission resource parameter of the common PDSCH allocated to the eRedCap terminal through the indication information carried on the PDCCH.

Optionally, the transmission resource parameter is implemented as a resource parameter allocated by the access network device to the eRedCap terminal. Illustratively, the access network device transmits the transmission resource parameter of the common PDSCH allocated to the eRedCap terminal through the PDCCH.

In some optional embodiments, the transmission resource parameter includes at least one of the baseband processing bandwidth and the TBS of the common PDSCH allocated to the eRedCap terminal.

Illustratively, when receiving the transmission resource parameter of the common PDSCH, the eRedCap terminal receives the baseband processing bandwidth of the common PDSCH allocated to the eRedCap terminal; or, receives the TBS of the common PDSCH allocated to the eRedCap terminal; or, receives both the baseband processing bandwidth and the TBS of the common PDSCH allocated to the eRedCap terminal.

In step 620, the receiving mode for the common PDSCH is determined based on the transmission resource parameter of the common PDSCH allocated to the first-type terminal and the terminal capability corresponding to the first-type terminal.

In an optional embodiment, the following description is provided by taking the first-type terminal implemented as an eRedCap terminal as an example.

Optionally, after receiving the PDCCH, the eRedCap terminal reads the PDCCH and determines the transmission resource parameter of the common PDSCH allocated to the eRedCap terminal based on the indication information carried on the PDCCH, thereby determining the baseband processing bandwidth of the common PDSCH allocated to the eRedCap terminal; or, determining the TBS of the common PDSCH allocated to the eRedCap terminal; or, determining both the baseband processing bandwidth and the TBS of the common PDSCH allocated to the eRedCap terminal.

The terminal capability corresponding to the eRedCap terminal refers to the processing capability of the eRedCap terminal. Optionally, the terminal capability corresponding to the eRedCap terminal is implemented as the terminal capability configured by the access network device for the eRedCap terminal; or, the terminal capability corresponding to the eRedCap terminal is implemented as the terminal capability configured by the eRedCap terminal itself, etc.

In an optional embodiment, the receiving mode of the common PDSCH includes the following forms.

### (1) Stop receiving common PDSCH

Optionally, when the transmission resource parameter of the common PDSCH allocated to the eRedCap terminal exceeds the terminal capability corresponding to the eRedCap terminal, the eRedCap terminal cannot receive the common PDSCH.

### (2) Receive common PDSCH

Optionally, when the transmission resource parameter of the common PDSCH allocated to the eRedCap terminal is within the range of the terminal capability corresponding to the eRedCap terminal, the eRedCap terminal is capable of receiving the common PDSCH.

It should be noted that the above are only illustrative examples, and the embodiments of the present application do not impose any limitation on this.

In the embodiments of the present application, the process of allocating the transmission resource parameter of the common PDSCH to the first-type terminal indicated by the indication information carried in the PDCCH is introduced. The first-type terminal is able to determine the transmission resource parameter by reading the PDCCH and adjust the receiving mode of the common PDSCH differentially based on the transmission resource parameter and the terminal capability possessed by the first-type terminal. When the ordinary terminal and the first-type terminal use the common PDSCH, the behavior of the first-type terminal is clarified, thereby improving the accuracy of scheduling for the first-type terminal.

Illustratively, reference is made to FIG. 7, which shows a flowchart of a scheduling method provided by an exemplary embodiment of the present disclosure. The method is described by taking the method being applied to an access network device as an example. As shown in FIG. 7, the method includes the following steps 710 to 720.

In step 710, the PDCCH is sent to the first-type terminal.

The PDCCH carries indication information.

In an optional embodiment, the following description is provided by taking the first-type terminal implemented as an eRedCap terminal as an example.

The indication information is used to indicate the transmission resource parameter of the common PDSCH allocated to the eRedCap terminal.

Optionally, the transmission resource parameter is implemented as a resource parameter allocated by the access network device to the eRedCap terminal. Illustratively, the transmission resource parameter of the common PDSCH allocated to the eRedCap terminal is transmitted through the PDCCH.

In some optional embodiments, the transmission resource parameter includes at least one of the baseband processing bandwidth and the TBS of the common PDSCH allocated to the eRedCap terminal.

Illustratively, when receiving transmission resource parameter of the common PDSCH, the eRedCap terminal receives the baseband processing bandwidth of the common PDSCH allocated to the eRedCap terminal; or, the eRedCap terminal receives the TBS of the common PDSCH allocated to the eRedCap terminal; or, the eRedCap terminal receives both the baseband processing bandwidth and the TBS of the common PDSCH allocated to the eRedCap terminal.

In step 720, the transmission resource parameter of the common PDSCH is configured for the first-type terminal.

The transmission resource parameter is used to represent the receiving mode of the common PDSCH. That is, the receiving mode of the common PDSCH is determined based on the transmission resource parameter of the common PDSCH of the first-type terminal.

In an optional embodiment, the receiving mode of the common PDSCH is determined based on the transmission resource parameter of the common PDSCH of the first-type terminal and the terminal capability corresponding to the first-type terminal. Optionally, the following description takes the implementation of the first-type terminal as an eRedCap terminal as an example.

The eRedCap terminal is used to determine the receiving mode for the common PDSCH based on the transmission resource parameter and the terminal capability. The terminal capability corresponding to the eRedCap terminal is used to represent the processing capability of the eRedCap terminal.

Optionally, after receiving the PDCCH, the eRedCap terminal determines the transmission resource parameter of the common PDSCH allocated to the eRedCap terminal based on the indication information carried by the PDCCH, and determines the following receiving modes for the common PDSCH based on the transmission resource parameter and the terminal capability.

### (1) Stop receiving common PDSCH

Optionally, when the transmission resource parameter of the common PDSCH allocated to the eRedCap terminal exceeds the terminal capability corresponding to the eRedCap terminal, the eRedCap terminal cannot receive the common PDSCH.

### (2) Receive common PDSCH

Optionally, when the transmission resource parameter of the common PDSCH allocated to the eRedCap terminal falls within the range of the terminal capability corresponding to the eRedCap terminal, the eRedCap terminal is capable of receiving the common PDSCH.

Optionally, the transmission resource parameter includes at least one of the baseband processing bandwidth and the transmission block size of the common PDSCH.

It should be noted that the above are only illustrative examples, and the embodiments of the present application do not impose any limitation on this.

In summary, after the access network device sends the common PDSCH and PDCCH to the first-type terminal, the first-type terminal may adjust the receiving mode for the common PDSCH differently based on the transmission resource parameter read by the first-type terminal and the terminal capability possessed by the first-type terminal. When the ordinary terminal and the first-type terminal use the common PDSCH, the behavior of the first-type terminal is clarified, and the accuracy of scheduling the first-type terminal is improved.

In the embodiments of the present application, the access network device comprehensively analyzes the terminal capability of the first-type terminal and whether there are resources transmitted to the first-type terminal in the common PDSCH, thereby determining the transmission resource parameter of the common PDSCH allocated to the first-type terminal. For the three methods mentioned above for comparing the terminal capability and the transmission resource parameter on the terminal side, the restriction on resource parameters transmitted by the access network device is implemented in at least one of the following ways.

For Method 1 on the terminal side, the access network device side is implemented as the following Method 1.

If the common PDSCH contains data that needs to be read by the first-type terminal, the transmission resource parameter transmitted by the access network device needs to be within the terminal capability of the first-type terminal. If the common PDSCH does not contain data that needs to be read by the first-type terminal, the transmission resource parameter transmitted by the access network device may be free from the restriction of the terminal capability of the first-type terminal. For example, if the common PDSCH contains data that needs to be read by the eRedCap terminal, the transmission resource parameter transmitted by the access network device needs to be within the terminal capability of the eRedCap terminal. If the common PDSCH does not contain data that needs to be read by the eRedCap terminal, the transmission resource parameter transmitted by the access network device may be free from the restriction of the terminal capability of the eRedCap terminal.

For Method 2 on the terminal side, the access network device side is implemented as the following Method 2.

When the access network device performs the common PDSCH transmission, the terminal capability limitation of the first-type terminal is not considered. For example, when the access network device performs the common PDSCH transmission, the terminal capability limitation of the eRedCap terminal is not considered.

For Method 3 on the terminal side, the access network device side is implemented as the following Method 3.

If the common PDSCH contains data that needs to be read by the first-type terminal, the transmission resource parameter transmitted by the access network device needs to be within a preset threshold. If the common PDSCH does not contain data that needs to be read by the first-type terminal, the transmission resource parameter transmitted by the access network device may not be subject to the preset threshold. For example, if the common PDSCH contains data that needs to be read by the eRedCap terminal, the transmission resource parameter transmitted by the access network device needs to be within the preset threshold. If the common PDSCH does not contain data that needs to be read by the eRedCap terminal, the transmission resource parameter transmitted by the access network device may not be subject to the preset threshold.

The above methods will be introduced in detail respectively.

**Method 1: If the common PDSCH contains data that needs to be read by the first-type terminal, the transmission resource parameter transmitted by the access network device needs to be within the terminal capability of the first-type terminal.**

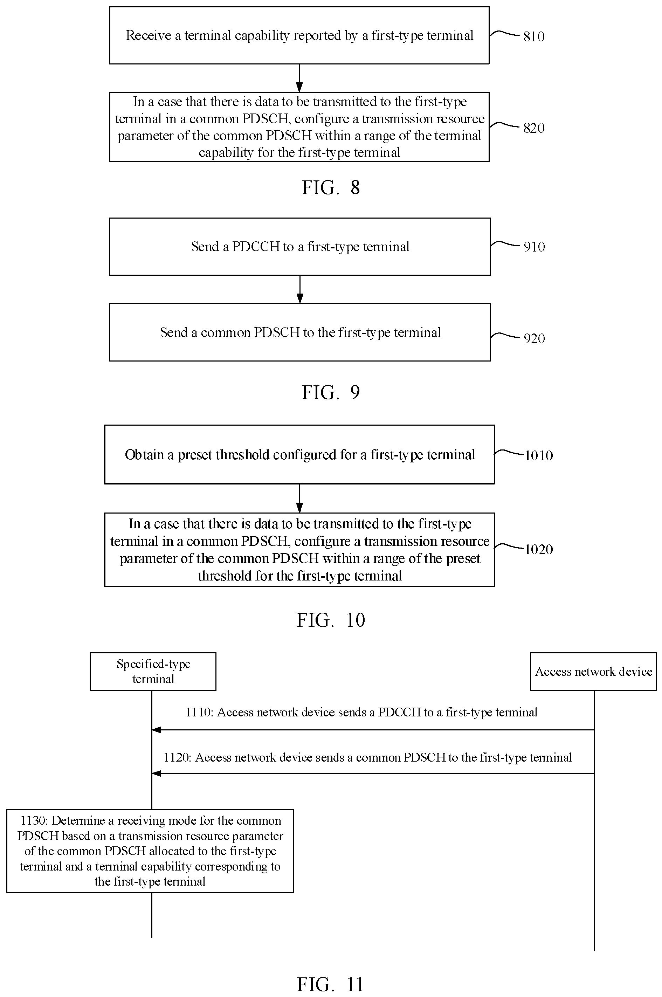

Illustratively, as shown in FIG. 8, the above step 720 may also be implemented as the following steps 810 to 820.

In step 810, the terminal capability reported by the first-type terminal is received.

In an optional embodiment, the following description takes the implementation of the first-type terminal as an eRedCap terminal as an example.

Illustratively, the access network device first determines the terminal capability corresponding to the eRedCap terminal.

Optionally, the terminal capability corresponding to the eRedCap terminal includes at least one of the bandwidth processing capability and the transmission block processing capability. The bandwidth processing capability is used to represent the baseband bandwidth processing limit that the eRedCap terminal is able to handle, while the transmission block processing capability is used to represent the limitation on the TBS that the eRedCap terminal is able to receive or read.

In an optional embodiment, the access network device configures the terminal capability of the eRedCap terminal for the eRedCap terminal and obtains the terminal capability of the eRedCap terminal; alternatively, the eRedCap terminal determines the terminal capability of the eRedCap terminal based on the default configuration, and the access network device determines the terminal capability of the eRedCap terminal based on the information sent by the terminal to the access network device, etc.

It should be noted that the above are only illustrative examples, and the embodiments of the present application do not impose any limitation on this.

In step 820, in a case that there is data to be transmitted to the first-type terminal in the common PDSCH, the transmission resource parameter of the common PDSCH within the terminal capability range is configured for the first-type terminal.

In an optional embodiment, the following description takes the implementation of the first-type terminal as an eRedCap terminal as an example.

Illustratively, when the access network device determines that there are resources in the common PDSCH for being transmitted to the eRedCap terminal, that is, there are resources in the common PDSCH that need to be received by the eRedCap terminal, the access network device determines that the transmission resource parameter of the common PDSCH allocated to the eRedCap terminal is less than the terminal capability.

The transmission resource parameter includes at least one of the baseband processing bandwidth and the TBS of the common PDSCH allocated to the eRedCap terminal.

When determining that the transmission resource parameter of the common PDSCH allocated to the eRedCap terminal is less than the terminal capability, the corresponding transmission resource parameter is limited within the corresponding terminal capability based on the difference in transmission resource parameter.

For different transmission resource parameters, the limitation of the transmission resource parameter includes at least one of the following situations.

### 1. The transmission resource parameter includes the baseband processing bandwidth.

Illustratively, when the transmission resource parameter is implemented as the baseband processing bandwidth, the baseband processing bandwidth of the common PDSCH allocated by the access network device to the eRedCap terminal is limited within the bandwidth processing capability corresponding to the eRedCap terminal.

### 2. The transmission resource parameter includes the TBS.

Illustratively, when the transmission resource parameter is implemented as the TBS, the TBS of the common PDSCH allocated by the access network device to the eRedCap terminal is limited within the transmission block processing capability corresponding to the eRedCap terminal.

### 3. The transmission resource parameter includes the baseband processing bandwidth and the TBS.

Illustratively, when the transmission resource parameter is implemented as the baseband processing bandwidth and the TBS, the baseband processing bandwidth of the common PDSCH allocated by the access network device to the eRedCap terminal is limited within the bandwidth processing capability corresponding to the eRedCap terminal, and the TBS of the common PDSCH allocated by the access network device to the eRedCap terminal is limited within the transmission block processing capability corresponding to the eRedCap terminal.

Optionally, based on the above process, the transmission resource parameter of the common PDSCH allocated by the access network device to the eRedCap terminal is set to be less than the terminal capability, thereby enabling the eRedCap terminal to receive the transmission resource parameter more accurately and completely, so that the eRedCap terminal can receive the common PDSCH more accurately based on the transmission resource parameter.

It should be noted that the above are only illustrative examples, and the embodiments of the present application do not impose any limitation on this.

In the embodiments of the present application, before allocating transmission resource parameter of the common PDSCH to the first-type terminal, the access network device first determines the terminal capability of the first-type terminal. Within the range of the terminal capability, the access network device allocates transmission resource parameter of the common PDSCH to the first-type terminal, enabling the first-type terminal to read a more accurate transmission resource parameter that better suits the first-type terminal itself, and to determine the receiving process for the PDSCH, thereby facilitating the first-type terminal to clarify its own terminal behavior and improving the accuracy of scheduling for the first-type terminal.

**Method 2: When the access network device performs common PDSCH transmission, the terminal capability limitation of the first-type terminal is not considered.**

Illustratively, as shown in FIG. 9, the above steps 710 to 720 may also be implemented as the following steps 910 to 920.

In step 910, the PDCCH is sent to the first-type terminal.

The PDCCH carries indication information, which is used to indicate the transmission resource parameter of the common PDSCH allocated to the first-type terminal.

In an optional embodiment, the following description takes the implementation of the first-type terminal as an eRedCap terminal as an example.

That is, the access network device enables the eRedCap terminal to determine the transmission resource parameter of the common PDSCH allocated to the eRedCap terminal by sending the PDCCH to the eRedCap terminal.

Optionally, the PDCCH also carries the resource allocation range corresponding to the first-type terminal on the common PDSCH.

In some optional embodiments, the transmission resource parameter includes at least one of the baseband processing bandwidth and the TBS of the common PDSCH allocated to the eRedCap terminal.

Illustratively, when receiving the transmission resource parameter of the common PDSCH, the eRedCap terminal receives the baseband processing bandwidth of the common PDSCH allocated to the eRedCap terminal; or receives the TBS of the common PDSCH allocated to the eRedCap terminal; or receives both the baseband processing bandwidth and the TBS of the common PDSCH allocated to the eRedCap terminal.

In an optional embodiment, the PDCCH is also used to indicate the resource allocation range corresponding to the eRedCap terminal on the common PDSCH.

Optionally, after the access network device sends the PDCCH to the eRedCap terminal, the eRedCap terminal is able to read the resource allocation range corresponding to the eRedCap terminal from the PDCCH.

Illustratively, the resource allocation range includes at least one of time-domain resource allocation information and frequency-domain resource allocation information. The resource allocation range corresponding to the eRedCap terminal is used to indicate the resource allocation range that is intended to be received by the eRedCap terminal, and the resource allocation range is within the baseband processing bandwidth.

In step 920, the common PDSCH is sent to the first-type terminal.

In an optional embodiment, the following description takes the implementation of the first-type terminal as an eRedCap terminal as an example. The eRedCap terminal is used to determine the receiving mode for the common PDSCH based on the transmission resource parameter and the terminal capability.

Optionally, in response to the baseband processing bandwidth of the common PDSCH being within the range of the terminal capability corresponding to the eRedCap terminal, the common PDSCH is received.

In an optional embodiment, in response to the baseband processing bandwidth of the common PDSCH exceeding the range of the terminal capability corresponding to the eRedCap terminal, a portion of the common PDSCH resource on the baseband processing bandwidth is received based on the terminal capability.

Optionally, a portion of the common PDSCH resource within the resource allocation range is received based on the terminal capability. Data padding is performed on the portion of the common PDSCH resource taking the resource allocation range as a reference to obtain the channel resource.

Illustratively, taking the resource allocation range as a reference means that the range of data padding is the resource allocation range. When the resource allocation range is greater than the terminal capability corresponding to the eRedCap terminal, resources within the resource allocation range but outside the terminal capability range, which cannot be received by the eRedCap terminal, are supplemented to obtain a supplemented channel resource.

Optionally, the channel resource is demodulated to obtain the channel transmission data.

Illustratively, after obtaining the channel resource based on the above data padding operation, the demodulation operation is performed on the channel resource to obtain the channel transmission data.

In an optional embodiment, after demodulating the channel resource and obtaining the channel transmission data, the reception of the common PDSCH is stopped.

It should be noted that the above are only illustrative examples, and the embodiments of the present application do not impose any limitation on this.

In the embodiments of the present application, it is introduced that the PDCCH sent by the access network device to the first-type terminal also carries the resource allocation range corresponding to the first-type terminal on the common PDSCH. Therefore, when the baseband processing bandwidth of the common PDSCH allocated to the first-type terminal exceeds the range of the terminal capability corresponding to the first-type terminal, the first-type terminal may receive a portion of the common PDSCH resource within the resource allocation range based on the terminal capability, and perform data padding on the portion of the common PDSCH resource with the resource allocation range as a reference, thereby enabling the first-type terminal to demodulate the padded channel resource to obtain the restored channel transmission data as much as possible. It is not only conducive to avoiding the first-type terminal blindly discarding data, but also conducive to clarifying the terminal behavior of the first-type terminal.

**Method 3: If the common PDSCH contains data that needs to be read by the first-type terminal, the transmission resource parameter transmitted by the access network device needs to be within a preset threshold; if the common PDSCH does not contain data that needs to be read by the first-type terminal, the transmission resource parameter transmitted by the access network device may be free from the restriction of the preset threshold.**

Illustratively, as shown in FIG. 10, the above step 720 may also be implemented as the following steps 1010 to 1020.

In step 1010, the preset threshold configured for the first-type terminal is obtained.

In an optional embodiment, the following description takes the implementation of the first-type terminal as an eRedCap terminal as an example.

Illustratively, the access network device first determines the preset threshold configured for the eRedCap terminal. Optionally, the preset threshold includes at least one of a preset bandwidth threshold and a preset TBS threshold.

In an optional embodiment, the access network device configures the preset threshold of the eRedCap terminal for the eRedCap terminal and obtains the preset threshold of the eRedCap terminal; alternatively, the eRedCap terminal determines the preset threshold based on a default configuration, and the access network device determines the preset threshold of the eRedCap terminal based on the information sent by the terminal to the access network device, etc.

It should be noted that the above are only illustrative examples, and the embodiments of the present application do not impose any limitation on this.

In step 1020: in a case that there is data to be transmitted to the first-type terminal in the common PDSCH, the transmission resource parameter of the common PDSCH within a range of the preset threshold is configured for the first-type terminal.

In an optional embodiment, the following description takes the implementation of the first-type terminal as an eRedCap terminal as an example.

Illustratively, description is given by taking the access network device sending the common PDSCH to the eRedCap terminal as an example. When the access network device determines that there are resources in the common PDSCH to be transmitted to the eRedCap terminal, that is, there are resources in the common PDSCH that need to be received by the eRedCap terminal, it is determined that the transmission resource parameter of the common PDSCH allocated to the eRedCap terminal is less than the preset threshold.

The transmission resource parameter includes at least one of the baseband processing bandwidth and the TBS of the common PDSCH allocated to the eRedCap terminal.

When determining that the transmission resource parameter of the common PDSCH allocated to the eRedCap terminal is less than the preset threshold, the corresponding transmission resource parameter is limited within the corresponding preset threshold based on the difference in the transmission resource parameters.

For different transmission resource parameters, the limitation of the transmission resource parameter includes at least one of the following situations.

### 1. The transmission resource parameter includes the baseband processing bandwidth.

Illustratively, when the transmission resource parameter is implemented as the baseband processing bandwidth, the baseband processing bandwidth of the common PDSCH allocated by the access network device to the eRedCap terminal is limited within the preset bandwidth threshold corresponding to the eRedCap terminal.

### 2. The transmission resource parameter includes the TBS.

Illustratively, when the transmission resource parameter is implemented as the TBS, the TBS of the common PDSCH allocated by the access network device to the eRedCap terminal is limited within the preset TBS threshold corresponding to the eRedCap terminal.

### 3. The transmission resource parameter includes the baseband processing bandwidth and the TBS.

Illustratively, when the transmission resource parameter is implemented as the baseband processing bandwidth and the TBS, the baseband processing bandwidth of the common PDSCH allocated by the access network device to the eRedCap terminal is limited within the preset bandwidth threshold corresponding to the eRedCap terminal, and the TBS of the common PDSCH allocated by the access network device to the eRedCap terminal is limited within the preset TBS threshold corresponding to the eRedCap terminal.

Optionally, based on the above process, the transmission resource parameter of the common PDSCH allocated by the access network device to the eRedCap terminal is made to be less than a preset threshold, thereby enabling the eRedCap terminal to receive the transmission resource parameter more accurately and completely, so that the eRedCap terminal can receive the common PDSCH more comprehensively.

It should be noted that the above are only illustrative examples, and the embodiments of the present application do not impose any limitation on this.

In the embodiments of the present application, before the access network device allocates transmission resource parameter of the common PDSCH to the first-type terminal, a preset threshold allocated to the first-type terminal is first determined. Within the range of the preset threshold, the transmission resource parameter of the common PDSCH is allocated to the first-type terminal, enabling the first-type terminal to read more accurate transmission resource parameter and determine the receiving process for the PDSCH, thereby facilitating the improvement of the scheduling accuracy for the first-type terminal.

FIG. 11 is a structural block diagram of a scheduling method provided in an exemplary embodiment of the present disclosure. The following description takes the example where the scheduling method is applied to an interaction process between the first-type terminal and the access network device.

In step 1110, the access network device sends a PDCCH to the first-type terminal.

The PDCCH carries indication information.

In an optional embodiment, the following description takes the case where the first-type terminal is implemented as an eRedCap terminal as an example.

The indication information is used to indicate the transmission resource parameter of the common PDSCH allocated to the eRedCap terminal. Optionally, the transmission resource parameter is implemented as the resource parameter allocated by the access network device to the eRedCap terminal. Illustratively, the transmission resource parameter of the common PDSCH allocated to the eRedCap terminal is transmitted through the PDCCH.

In some optional embodiments, the transmission resource parameter includes at least one of the baseband processing bandwidth and the TBS of the common PDSCH allocated to the eRedCap terminal.

Illustratively, when receiving the transmission resource parameter of the common PDSCH, the eRedCap terminal receives the baseband processing bandwidth of the common PDSCH allocated to the eRedCap terminal; or receives the TBS of the common PDSCH allocated to the eRedCap terminal; or receives both the baseband processing bandwidth and the TBS of the common PDSCH allocated to the eRedCap terminal.

In step 1120, the access network device sends the common PDSCH to the first-type terminal.

In an optional embodiment, the following description takes the implementation of the first-type terminal as an eRedCap terminal as an example.

Optionally, after receiving the PDCCH, the eRedCap terminal determines the transmission resource parameter of the common PDSCH allocated to the eRedCap terminal based on the indication information carried by the PDCCH, and determines the following receiving modes for the common PDSCH based on the transmission resource parameter and the terminal capability.

### (1) Stop receiving the common PDSCH

Optionally, when the transmission resource parameter of the common PDSCH allocated to the eRedCap terminal exceeds the terminal capability corresponding to the eRedCap terminal, the eRedCap terminal cannot receive the common PDSCH.

### (2) Receive the common PDSCH

Optionally, when the transmission resource parameter of the common PDSCH allocated to the eRedCap terminal falls within the range of the terminal capability corresponding to the eRedCap terminal, the eRedCap terminal is capable of receiving the common PDSCH.

In step 1130, the receiving mode for the common PDSCH is determined based on the transmission resource parameter of the common PDSCH allocated to the first-type terminal and the terminal capability corresponding to the first-type terminal.

Optionally, the following description is provided by taking a first-type terminal as an eRedCap terminal as an example. The terminal capability corresponding to the eRedCap terminal is used to represent the processing capability of the eRedCap terminal.

In some optional embodiments, the transmission resource parameter includes at least one of the baseband processing bandwidth and the TBS of the common PDSCH allocated to the eRedCap terminal.

Optionally, the terminal receives the transmission resource parameter sent by the access network device. Illustratively, the access network device transmits the allocated transmission resource parameter of the common PDSCH to the eRedCap terminal through the PDCCH. Optionally, the common PDSCH refers to the transmission communication data channel shared by the ordinary terminal and the eRedCap terminal, that is, the common PDSCH is a channel commonly used by the ordinary terminal and the eRedCap terminal.

In summary, based on the transmission resource parameter of the common PDSCH of the first-type terminal and the terminal capability corresponding to the first-type terminal, the receiving mode of the common PDSCH is determined. This enables the first-type terminal to differentially adjust the receiving mode for the common PDSCH based on the terminal capability of the first-type terminal after determining the transmission resource parameter of the common PDSCH. When the ordinary terminal and the first-type terminal use the common PDSCH, the behavior of the first-type terminal is clarified, thereby improving the accuracy of scheduling the first-type terminal.

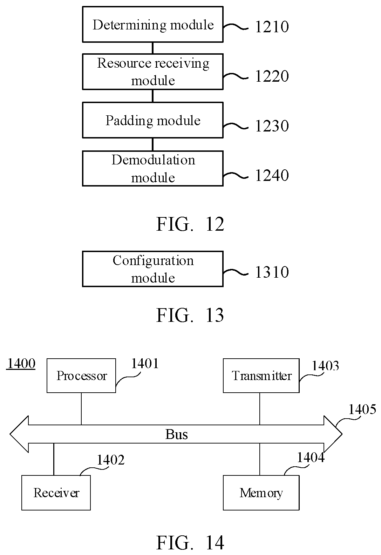

FIG. 12 is a structural block diagram of a scheduling apparatus provided in an exemplary embodiment of the present disclosure. As shown in FIG. 12, the apparatus includes:

a receiving module 1210, configured to receive a common physical downlink shared channel (PDSCH), where a receiving mode of the common PDSCH is determined based on a transmission resource parameter of the common PDSCH of the first-type terminal.

In an optional embodiment, the receiving mode of the common PDSCH is determined based on the transmission resource parameter of the common PDSCH of the first-type terminal and a terminal capability corresponding to the first-type terminal.

In an optional embodiment, the transmission resource parameter includes at least one of a baseband processing bandwidth and a TBS of the common PDSCH allocated to the eRedCap terminal.

In an optional embodiment, the receiving module 1210 is further configured to receive the common PDSCH in a case that the transmission resource parameter of the common PDSCH is within a range of the terminal capability corresponding to the first-type terminal.

In an optional embodiment, the receiving module 1210 is further configured to stop receiving the common PDSCH in a case that the transmission resource parameter of the common PDSCH exceeds the range of the terminal capability corresponding to the first-type terminal.

In an optional embodiment, the transmission resource parameter includes a baseband processing bandwidth.

The apparatus further includes:
a resource receiving module 1220, configured to, in a case that the baseband processing bandwidth of the common PDSCH exceeds the range of the terminal capability corresponding to the first-type terminal, receive a portion of the common PDSCH resource on the baseband processing bandwidth based on the terminal capability.

In an optional embodiment, the resource receiving module 1220 is further configured to, in a case that the baseband processing bandwidth of the common PDSCH exceeds the range of the terminal capability corresponding to the first-type terminal, read a resource allocation range corresponding to the first-type terminal on the common PDSCH from a physical downlink control channel (PDCCH); and receive a portion of the common PDSCH resource within the resource allocation range based on the terminal capability.

In an optional embodiment, the apparatus further includes:
a padding module 1230, configured to perform data padding on resource data exceeding the portion of the common PDSCH resource within the resource allocation range, to obtain the channel resource;
a demodulation module 1240, configured to demodulate the channel resource to obtain channel transmission data.

In an optional embodiment, the receiving module 1210 is further configured to receive the common PDSCH in response to the transmission resource parameter of the common PDSCH being within a preset threshold corresponding to the first-type terminal.

In an optional embodiment, the receiving module 1210 is further configured to stop receiving the common PDSCH in response to the transmission resource parameter of the common PDSCH exceeding the preset threshold corresponding to the first-type terminal.

In an optional embodiment, the receiving module 1210 is further configured to receive indication information, which is used to indicate the transmission resource parameter of the common PDSCH allocated to the first-type terminal.

In an optional embodiment, the receiving module 1210 is further configured to receive a PDCCH, which carries the indication information.

In an optional embodiment, the first-type terminal includes an enhanced reduced capability (eRedCap) terminal.

In summary, the receiving mode of the common PDSCH is determined based on the transmission resource parameter of the common PDSCH of the first-type terminal, enabling the first-type terminal to differentially adjust the receiving mode for the common PDSCH after determining the transmission resource parameter of the common PDSCH. This clarifies the terminal behavior of the first-type terminal when the ordinary terminal and the first-type terminal use the common PDSCH, thereby improving the accuracy of scheduling the first-type terminal.

FIG. 13 is a structural block diagram of a scheduling apparatus provided in an exemplary embodiment of the present disclosure. As shown in FIG. 13, the apparatus includes:
a configuration module 1310, configured to configure a transmission resource parameter of a common PDSCH for a first-type terminal, where the transmission resource parameter is used to indicate a receiving mode for the common PDSCH.

In an optional embodiment, the receiving mode of the common PDSCH is determined based on the transmission resource parameter of the common PDSCH of the first-type terminal and the terminal capability corresponding to the first-type terminal.

In an optional embodiment, the transmission resource parameter includes at least one of a baseband processing bandwidth and a transmission block size of the common PDSCH.

In an optional embodiment, the configuration module 1310 is further configured to: receive a terminal capability reported by the first-type terminal; and

in a case that there is data to be transmitted to the first-type terminal in the common PDSCH, configure a transmission resource parameter of the common PDSCH within a range of the terminal capability for the first-type terminal.

In an optional embodiment, the configuration module 1310 is further configured to send a PDCCH to the first-type terminal, where the PDCCH is used to indicate the transmission resource parameter of the common PDSCH configured for the first-type terminal.

In an optional embodiment, the PDCCH is further used to indicate a resource allocation range corresponding to the first-type terminal on the common PDSCH.

In an optional embodiment, the configuration module 1310 is further configured to configure a transmission resource parameter of the common PDSCH within a preset threshold range for the first-type terminal, in a case that there is data to be transmitted to the first-type terminal in the common PDSCH.

In an optional embodiment, the first-type terminal includes an eRedCap terminal.

In summary, after the access network device sends the common PDSCH and PDCCH to the first-type terminal, the transmission resource parameter read by the first-type terminal and the terminal capability possessed by the first-type terminal are used to differentially adjust the receiving mode for the common PDSCH. When the ordinary terminal and the first-type terminal use the common PDSCH, the behavior of the first-type terminal is clarified, and the accuracy of scheduling the first-type terminal is improved.

It should be noted that the scheduling apparatus provided in the above embodiment is only illustrated by way of an example of the division of the above functional modules. In actual applications, the above functions may be assigned to be accomplished by different functional modules as needed, that is, the internal structure of the device is divided into different functional modules to complete all or part of the functions described above. In addition, the scheduling apparatus provided in the above embodiment and the embodiment of the scheduling method belong to the same concept, and the specific implementation process thereof is detailed in the method embodiment, which will not be repeated herein.

FIG. 14 shows a schematic structural diagram of a communication device 1400 (a terminal or an access network device) provided by an exemplary embodiment of the present disclosure. The terminal includes: a processor 1401, a receiver 1402, a transmitter 1403, a memory 1404, and a bus 1405.

The processor 1401 includes one or more processing cores. The processor 1401 executes various functional applications and information processing by running software programs and modules.

The receiver 1402 and the transmitter 1403 may be implemented as one communication component, which may be a communication chip.

The memory 1404 is connected to the processor 1401 via the bus 1405.

The memory 1404 may be used to store at least one instruction, and the processor 1401 is used to execute the at least one instruction, so as to implement various steps in the above-mentioned method embodiments.

In addition, the memory 1404 may be implemented by any type of volatile or non-volatile storage device, or a combination thereof. The volatile or non-volatile storage device includes, but is not limited to: a magnetic disk or an optical disk, an electrically erasable programmable read only memory (EEPROM), an erasable programmable read only memory (EPROM), a static random access memory (SRAM), a read only memory (ROM), a magnetic storage device, a flash memory, and a programmable read only memory (PROM).

A non-transitory computer-readable storage medium is provided, when instructions in the non-transitory computer storage medium are executed by a processor of a terminal, the terminal is enabled to execute the above-mentioned scheduling method.

An exemplary embodiment of the present disclosure further provides a message receiving system, and the system includes a terminal and an access network device;

The terminal includes a scheduling apparatus provided in the embodiment shown in FIG. 12.

The access network device includes a scheduling apparatus provided in the embodiment shown in FIG. 13.

An exemplary embodiment of the present disclosure further provides a computer-readable storage medium, in which at least one instruction, at least one program, a code set, or an instruction set is stored. The at least one instruction, the at least one program, the code set, or the instruction set is executed by a processor to implement the steps performed by the terminal in the scheduling methods provided by the above-mentioned various method embodiments.

It should be understood that "multiple" mentioned in the present disclosure refers to two or more. The term "and/or" describes the association relationship of the associated objects, and indicates that there may be three relationships. For example, A and/or B may mean: A exists alone, A and B exist at the same time, and B exists alone. The character "/" generally indicates that the associated objects are in an "or" relationship.

Other implementations of the embodiments of the present disclosure will readily occur to those skilled in the art upon consideration of the specification and practice of the disclosure disclosed herein. The present disclosure is intended to cover any modifications, uses, or adaptations, which follow the general principles of the embodiments of the present disclosure and include common knowledge or conventional technical means in the technical field not disclosed in the present disclosure. The specification and embodiments are to be regarded as exemplary only, and the true scope and spirit of the embodiments of the present disclosure are indicated by the following claims.

It should be understood that the present disclosure is not limited to the exact structures that have been described above and shown in the accompanying drawings, and that various modifications and changes may be made without departing from the scope thereof. The scope of the present disclosure is limited only by the appended claims.

## Claims

1. A scheduling method, wherein the method is performed by a first-type terminal, and the method comprises:
receiving a common physical downlink shared channel (PDSCH), wherein a receiving mode of the common PDSCH is determined based on a transmission resource parameter of the common PDSCH of the first-type terminal.

2. The method according to claim 1, wherein the receiving mode of the common PDSCH is determined based on the transmission resource parameter of the common PDSCH of the first-type terminal and a terminal capability corresponding to the first-type terminal.

3. The method according to claim 1, wherein the transmission resource parameter comprises at least one of a baseband processing bandwidth and a transmission block size of the common PDSCH.

4. The method according to claim 1, wherein receiving the common physical downlink shared channel (PDSCH) comprises:
in a case that the transmission resource parameter of the common PDSCH is within a range of a terminal capability corresponding to the first-type terminal, receiving the common PDSCH.

5. The method according to claim 4, wherein the method further comprises:
in a case that the transmission resource parameter of the common PDSCH exceeds the range of the terminal capability corresponding to the first-type terminal, stopping receiving the common PDSCH.

6. The method according to claim 1, wherein the transmission resource parameter comprises a baseband processing bandwidth;
receiving the common physical downlink shared channel (PDSCH) comprises:
in a case that the baseband processing bandwidth of the common PDSCH exceeds a range of a terminal capability corresponding to the first-type terminal, receiving a portion of the common PDSCH resource on the baseband processing bandwidth based on the terminal capability.

7. The method according to claim 6, wherein, in a case that the baseband processing bandwidth of the common PDSCH exceeds the range of the terminal capability corresponding to the first-type terminal, receiving the portion of the common PDSCH resource on the baseband processing bandwidth based on the terminal capability comprises:
in a case that the baseband processing bandwidth of the common PDSCH exceeds the range of the terminal capability corresponding to the first-type terminal, reading a resource allocation range corresponding to the first-type terminal on the common PDSCH from a physical downlink control channel (PDCCH); and
receiving a portion of the common PDSCH resource within the resource allocation range based on the terminal capability.

8. The method according to claim 7, wherein the method further comprises:
performing data padding on resource data exceeding the portion of the common PDSCH resource within the resource allocation range, to obtain a channel resource; and
demodulating the channel resource to obtain channel transmission data.

9. The method according to claim 1, wherein receiving the common physical downlink shared channel (PDSCH) comprises:
in response to the transmission resource parameter of the common PDSCH being within a preset threshold corresponding to the first-type terminal, receiving the common PDSCH.

10. The method according to claim 9, wherein the method further comprises:
in response to the transmission resource parameter of the common PDSCH exceeding the preset threshold corresponding to the first-type terminal, stopping receiving the common PDSCH.

11. The method according to any one of claims 1 to 10, wherein the method further comprises:
receiving indication information, wherein the indication information is used to indicate the transmission resource parameter of the common PDSCH allocated to the first-type terminal.

12. The method according to claim 11, wherein the method further comprises:
receiving a PDCCH, wherein the PDCCH carries the indication information.

13. The method according to claim 1, wherein the first-type terminal comprises an enhanced reduced capability (eRedCap) terminal.

14. A scheduling method, wherein the method is performed by an access network device, and the method comprises:
configuring a transmission resource parameter of a common PDSCH for a first-type terminal, wherein the transmission resource parameter is used to indicate a receiving mode for the common PDSCH.

15. The method according to claim 14, wherein the transmission resource parameter comprises at least one of a baseband processing bandwidth and a transmission block size of the common PDSCH.

16. The method according to claim 14, wherein configuring the transmission resource parameter of the common PDSCH for the first-type terminal comprises:
receiving a terminal capability reported by the first-type terminal; and
in a case that data to be transmitted to the first-type terminal exists in the common PDSCH, configuring the transmission resource parameter of the common PDSCH within a range of the terminal capability for the first-type terminal.

17. The method according to claim 14, wherein configuring the transmission resource parameter of the common PDSCH for the first-type terminal comprises:
sending a PDCCH to the first-type terminal, wherein the PDCCH is used to indicate the transmission resource parameter of the common PDSCH configured for the first-type terminal.

18. The method according to claim 17, wherein the PDCCH is further used to indicate a resource allocation range corresponding to the first-type terminal on the common PDSCH.

19. The method according to claim 14, wherein configuring the transmission resource parameter of the common PDSCH for the first-type terminal comprises:
in a case that data to be transmitted to the first-type terminal exists in the common PDSCH, configuring the transmission resource parameter of the common PDSCH within a preset threshold range for the first-type terminal.

20. The method according to claim 14, wherein the first-type terminal comprises an eRedCap terminal.

21. A scheduling apparatus, wherein the apparatus comprises:
a receiving module, configured to receive a common physical downlink shared channel (PDSCH), wherein a receiving mode of the common PDSCH is determined based on a transmission resource parameter of the common PDSCH of the first-type terminal.

22. A scheduling apparatus, wherein the apparatus comprises:
a configuration module, configured to configure a transmission resource parameter of a common PDSCH for a first-type terminal, wherein the transmission resource parameter is used to indicate a receiving mode for the common PDSCH.

23. A terminal, comprising:
a processor; and
a transceiver, connected to the processor;
wherein the processor is configured to perform executable instructions to implement the scheduling method according to any one of claims 1 to 13.

24. An access network device, comprising:
a processor; and
a transceiver, connected to the processor;
wherein the processor is configured to perform executable instructions to implement the scheduling method according to any one of claims 14 to 20.

25. A computer-readable storage medium, wherein at least one instruction is stored in the computer-readable storage medium, and the at least one instruction is performed by a processor to implement the scheduling method according to any one of claims 1 to 13 and the scheduling method according to any one of claims 14 to 20.
